# EUROPEAN PATENT SPECIFICATION

(11) **EP 3 976 431 B1**
(45) Date of publication and mention of the grant of the patent: **18.06.2025**
(21) Application number: 20815474.0
(22) Date of filing: 22.07.2020
(51) Int. Cl.: B60W 30/08, B60R 21/013, B60R 21/0134, G08G 1/16, B60W 30/085, B60W 30/095

(54) **CLOSE-IN COLLISION DETECTION AND VEHICLE DRIVER BEHAVIOR DATA COLLECTION AND REPORTING**
CLOSE-IN-KOLLISIONSERKENNUNG SOWIE ERFASSUNG UND MELDUNG VON DATEN ZUM FAHRZEUGFAHRERVERHALTEN
DÉTECTION DE COLLISION RAPPROCHÉE ET COLLECTE ET COMMUNICATION DE DONNÉES SUR LE COMPORTEMENT D'UN CONDUCTEUR DE VÉHICULE

(30) Priority: 22.01.2020 US 202062964350 P; 26.05.2020 US 202016883679
(43) Date of publication of application: 06.04.2022
(73) Proprietor: Preact Technologies, Inc., Herndon VA 20170 (US)
(72) Inventor: BRENDLEY, Kurt, Herndon, VA 20170 (US); BRENDLEY, Keith, Herndon, VA 20170 (US); BENCH, Jared, Herndon, VA 20170 (US); DRYSCH, Paul, Herndon, VA 20170 (US)
(74) Representative: Flach Bauer & Partner Patentanwälte mbB
(86) International application number: PCT/US2020/043036
(87) International publication number: WO 2020/243735

(56) References cited:
- US-A- 6 012 008
- US-A1- 2002 169 533
- US-A1- 2006 052 924
- US-A1- 2009 192 710
- US-A1- 2017 097 243
- US-A1- 2017 101 093
- US-A1- 2017 291 602
- US-A1- 2018 105 180
- US-A1- 2018 293 449

## Description

This application claims priority from US patent application no. 62/964,350 filed 01/22/2020; US patent application no. 16/883,679 filed 05/26/2020; and US patent application no. 62/852,841 filed May 24, 2019.

### BACKGROUND & SUMMARY

Even with all of the safety devices built into vehicles in the United States, 11% of the over 41 million accidental injuries reported in the U.S. at emergency rooms are due to traffic incidents. In 2017 alone, over 37,000 people lost their lives due to traffic accidents in the U.S. Most of these fatalities occurred in vehicles with fully operational airbags and where the occupants were using seatbelts. Clearly, existing safety technology, even when properly utilized, is insufficient to protect people from serious injury and even death. There is a long felt but unsolved need to address and overcome these limitations, which every year are costing tens of thousands of lives in the US alone and hundreds of thousands worldwide.

Risky driving behaviors that lead to accidents are typically described in human driver terms, such as weaving in and out of lanes; failure to yield right of way; driving under the influence of alcohol, drugs or other judgment-impairing substance; speeding; not paying close attention to road conditions; tailgating; and driving while drowsy or distracted. These terms are highly subjective and can be both inaccurate and misleading. A driver judged as not paying close attention, for example, may merely have made a mistake in reading a road sign. Even speeding is not always dangerous if the driver is merely keeping up with traffic and is otherwise driving in a safe and sensible manner.

US 6 012 008 discloses a method and apparatus for predicting a crash and reacting thereto. An apparatus is mounted on a vehicle and determines the time-to-impact for approaching obstacles that are within a limited distance from the host vehicle. The sensing distance from the vehicle is set by signal processing of reflected signals and rejection of all responses corresponding to a distance greater than the preset limiting value.

US 2017/0291602 A1 suggests a system and method to avoid collisions on highways, and to minimize the fatalities, injury, and damage when a collision is unavoidable. The system includes sensor means to detect other vehicles, and computing means to evaluate when a collision is imminent and to determine whether the collision is avoidable.

What is needed are quantitative measures of dangerous or risky driving that are based on measured results. There have been attempts at building such statistics using various means. Some insurance companies, for example, have begun using telematics to monitor driving habits. A telematics system is often a sensor cluster comprised a wireless network adapter, an accelerometer, a GPS receiver, an OBD-II interface, and a processor. The device continually gathers information and reports it for evaluation. See for example US20190392529 and US20200020029. In addition, US20190375416 discloses using artificial intelligence to score driving behavior based on driving data collected from telematics systems.

While much work has been done in the past, further improvements are desirable. In particular, it would be highly desirable to gather more accurate data that more specifically indicates risky driving behavior.

### BRIEF DESCRIPTION OF THE DRAWINGS

**Figure** 1 is a block diagram of an overall process.
**Figure** 2 is a schematic diagram of a vehicle.
**Figure** 3 shows several different hardware architectures for integrating the sensor system into different hardware communication schema.
**Figure** 4 shows an example block diagram of an Edge Cross Correlation Engine (ECCE).
**Figure** 5 shows an example block diagram of a software architecture supporting precrash operations.
**Figure** 6 shows a design approach for a time-of-flight (TOF) sensor.
**Figure** 7 shows an example of how a TOF sensor builds a point cloud, that is then converted to an object, which is tracked and used to form a probability of impact.
**Figure** 8 shows a typical a approach for packaging the sensor and edge processing assembly into both headlamps and tail lamps.
**Figure** 9 shows an example approach for attaining 360 degree surround coverage.

Technology according to an embodiment of the invention provides an innovative safety technology that identifies an imminent crash before impact and then provides information to rapidly engages preemptive countermeasures that protect the vehicle and its occupants. For example, the technology according to an embodiment of the invention herein provides a sensor and processing system which can accurately determine if/when a crash is imminent in the vanishingly short time available to act on that knowledge. This allows far more robust and effective safety measures to be employed as opposed to today's technology which typically waits until the collision occurs before taking any action.

Such technology can also be used to identify or predict risky driving behavior such as "close calls" or "near misses" of potential accidents and crashes in addition to recording detailed data leading to actual crashes. This allows far more robust and effective safety measures to be employed as opposed to today's technology which provides no data regarding near misses and relatively limited data once a collision occurs. The system can continually operate while the vehicle is in operation. It can log data for real time or intermittent reporting (e.g., over a wireless network), making determinations in real time and display the determinations for driver safety training, and/or taking other actions in the event of a near-certain collision. The determinations take the form of predictions of 1) collision likelihood and 2) potential severity of collision.

Instead of merely monitoring the "jerkiness" of driving behavior or vehicle speed (which may in fact be safe and not erratic), the embodiments according to the invention sense and measure closing velocities and distances between the ego vehicle and other objects including other vehicles. These data feed into two algorithms for real-time processing: 1) a Collision Probability Engine (CPE) and 2) a Collision Severity Calculator (CSC). The CPE uses the kinematics of the ego vehicle and the sensed kinematics of threat objects to calculate all physically possible outcomes. From that, it can calculate the probability of a collision. As the underlying algorithms are relatively simple, they may be calculated in real time on computation platforms of reasonable size, power and cost for the automotive market. The CSC operates in similar fashion. The potential physically-realizable paths that result in a collision are evaluated as to the potential threat they pose should a collision actually occur. For example, the threat posed by having a large object impact the driver's door would be judged as greater than the threat of sideswiping a much smaller object.

The active sensor suite can be used to report events such as near misses or even actual collisions in real time for analysis and action. For example, a fleet dispatcher can check with a driver after a collision is reported to see if assistance is needed, or an insurance company can modify insurance coverage of a habitually risky driver or require the driver to obtain driver safety education. A driver may be weaving in traffic, for example, to avoid other aggressive drivers, something which mere telematics of vehicle motion cannot reveal. The active sensor suite according to an embodiment of the invention can detect such excellent driving skills and provide rewards such as good driving discounts or letters of congratulation for avoiding accidents in hazardous conditions. In some embodiments, processing can be performed locally in real time to give drivers feedback on how they are driving. In other embodiments, data can be logged and reported in real time and/or intermittently. Raw collected data can be reported to a processor in the cloud which performs the analysis; or the data can be fully processed and results are reported; or the data can be partially processed and results can be reported along with some or all of the underlying raw data. In some embodiments, results can be reported and underlying raw data is reported upon request/demand.

An active sensor suite may use high-speed, near-field optics and embedded computing or other high speed sensing according to an embodiment of the invention, tracking and processing technology. Embodiments according to the invention herein can determine precisely when and where (e.g., in which direction) a collision is going to occur, buying precious time to respond. With this forewarning, robust countermeasures can have sufficient time to engage. This may include for example external airbags that cushion the blow to pedestrians or protect vehicle occupants from lethal side impacts. Larger and thus far more effective airbags can be employed that both inflate at slower speeds and serve to protect occupants on all sides. The vehicle itself can improve its crashworthiness by adjusting the suspension and internal cab features such as the steering column or moving seats.

In other embodiments, there is no or may not be any deployment of a countermeasure. For example, in some embodiments, no countermeasure is present and information is collected, stored and forwarded for other purposes (e.g., insurability/risk evaluation). In other embodiments, the system feeds collision probability, time, severity and impact location to another system, and the other system uses that information to decide whether to control the countermeasure to deploy.

In embodiments according to the invention, a relevant time window for the technology herein to operate is shortly before an impact - i.e., from a time when the driver of the vehicle can do little to avoid or minimize the impact. Such time window imposes real time and near field constraints that lessens the intent of the driver(s) and reduces the collision problem to more deterministic factors such as Newtonian physics. In some embodiments, rather than avoiding a collision, the vehicle automatically and swiftly prepares for a collision beginning at a time instant so soon before the collision actually occurs that the collision is highly predictable and unavoidable. Such a time window can begin for example at one second, or one-half second (500 milliseconds), or 0.25 seconds (250 milliseconds), or 0.2 seconds (200 milliseconds), or 0.15 seconds (150 milliseconds), or 0.1 seconds (100 milliseconds) or 0.05 seconds (50 milliseconds), before instant of impact. A sufficiently short time removes all relevant human behavior, allowing crashes and near misses to be evaluated on purely quantitative terms. Some have measured the average time for humans to react to a visual stimulus at 0.25 seconds ("human reaction time interval"). It is unrealistic to expect the human driver of a vehicle to react and respond in less time than the human reaction time interval, and the principles of physics may dictate that based on the conditions (i.e,. motion of the ego vehicle, road conditions, potentially motion of another vehicle, etc.) that are determined to exist at a particular instant in time, an accident or collision is unavoidable within the human reaction time interval subsequent to that particular instant in time.

Because deploying countermeasures such as air bags will often have the effect of distracting or hindering the driver from being able to see and/or operate vehicle controls effectively, deploying countermeasures too early could have deleterious effects of (a) preventing the driver from taking evasive action to avoid a collision or minimize its impact and/or (b) deploying a countermeasure before an impact is a certainty (and thus might still be avoidable). However, waiting until an impact is detected (as most modern systems do) wastes precious milliseconds before an imminent crash that could be used to deploy a lifesaving countermeasure.

Technology according to an embodiment of the invention uses highly reliable very fast acting detectors that when combined with the appropriate software statistically have very few false positives within the short time window before a collision (i.e., they can be counted on to reliably detect with a high degree of certainty that a crash is both imminent and unavoidable) to deploy countermeasures such as air bags or other lifesaving techniques.

The technology according to an embodiment of the invention fits well with the ADAS and AV architectures already being considered in the industry and in some cases even fielded across the industry. While these technologies themselves will provide further safety in crash avoidance, vehicle crashes, sadly, are projected to continue increasing globally before eventually declining decades from now. The technology according to an embodiment of the invention holds forth the promise of making the roads safer in the very near future, and by a substantial margin. Deployed worldwide, the technology promises nothing short of a revolution in automotive safety that eclipses even the advances enabled by seatbelts and the current generation of airbags.

While the automotive industry is focused on active safety (e.g. ADAS), little effort is made towards passive safety technology (e.g. seatbelts and airbags). Where ADAS focuses on driver convenience in addition to safety, it accomplishes this by enhancing emergency maneuvers of the vehicle via means such as active braking and lane intrusion warnings. Embodiments according to the invention, on the other hand, focus on safety at the last fraction of a second where no amount of vehicular maneuvers or braking can avoid an imminent collision.

Technology according to an embodiment of the invention provides sensors and system control architectures that are capable of collecting and processing many large quantities of data every second. This allows an extremely accurate countermeasure solution to be fully deployed in just a few milliseconds or less. Technology according to an embodiment of the invention is able to accurately predict the collision of a vehicle with another vehicle or object and then launch one or a suite of countermeasures, such as advanced airbags, to protect occupants in ways heretofore considered impossible.

Embodiments according to the invention provide a sensing and advanced processing system that can predict an imminent crash with assurance. Adding even 50 milliseconds would roughly double the reaction time. While early simulation experiments indicate that as much as 250 milliseconds of warning of an imminent unavoidable collision is achievable, even a fraction of that would revolutionize the passive safety market. The embodiment can also operate up to a second ahead of a crash for selected types of countermeasures and in selected scenarios. With the addition of more time, passive safety systems can do much more to prepare the vehicle for a collision: deploy exterior airbags, adjust the suspension, and inflate larger interior airbags at slower speeds. These combined measures translate directly into reduced injuries and fatalities due to the crash and certainly due to the airbag itself.

Additional features and advantages may include:
High Speed - threat tracks leading predictions of collision and severity are developed in a very limited amount of time
Near Field - Removes human intent (lateral or in-line) and is based purely on the physics of the objects (e.g., momentum under Newton's laws that cannot change a crash scenario significantly no matter what the human operator or an obstacle such as another vehicle might do or attempt to do)
Fast Real Time Processing - One example embodiment uses massive parallel processing of sensors feeding into distributed FPGAs (field programmable gate arrays) or similar computation capabilities.

Takes the velocity(ies) of objects into account when determining when a collision is imminent or will result in a close call.

Embodiments according to the invention perform close-in collision detection that combines high sample rate near-field sensors with advanced real-time processing to accurately determine imminent threats and the likelihood of a collision. This allows applicable countermeasures to be deployed based upon the (high) probability of a collision, while also taking into account the type of threat, and the impending impact's location on the passengers of the vehicle. This new approach will soon transform the passive safety market to greatly reduce injuries from automotive crashes and safe lives.

### For example:

Suppose one is driving a vehicle moving at 65 mph (30 m/s) and an oncoming vehicle is moving at 65 mph (30 m/s). The combined relative speed is 130 mph (60 m/s).

Let's assume the system needs 100 milliseconds advance notice to deploy the external airbags and other new passive safety features.

Therefore, the vehicle would have to determine an imminent threat when the oncoming vehicle is 6 meters away, about one vehicle length.

Example technology herein waits until the last possible moment (or within a time window that includes the last possible moment) to automatically deploy a countermeasure when no human or machine maneuver can change the outcome (e.g., whether or not a crash occurs).

Given the extreme rapidity of the required response, a system according to an embodiment of the invention may use a sensor which can sample from at least 200 Hz to 500 Hz or faster. In one embodiment according to the invention, the data from this sensor feeds into a high-speed processor to determine the vehicle trajectory with the accuracy of e.g., 10 to 20 centimeters. From this, the impact point on the vehicle is estimated along with the likelihood of serious collision. The timing and sequence of countermeasures, if any, are calculated and controlled. All of this happens (and needs to happen) in just a few tens of milliseconds in embodiments according to the invention.

Additional optional features include:
The system according to the invention may further comprise a countermeasure operatively coupled to the processor, the processor controlling the countermeasure to deploy in response to determining the imminent collision.

The sensor may comprise a non-contact sensor.

The processor may determine an imminent collision during a time window within the range of 250 milliseconds, 200 milliseconds, 150 milliseconds, 100 milliseconds, 50 milliseconds and/or 0 milliseconds (this is still useful since it would assist the standard inertial sensors to react more quickly and precisely) before a collision occurs. It may also determine a lower-probability of collision at longer times suitable for some types of countermeasures.

The countermeasure may comprise an air bag, a seat belt tensioner, an external pedestrian air bag, an adjustable seat, an active suspension system or other countermeasure.

The sensor may comprise a time-of-flight sensor, stereoscopic sensor or other.

The sensor may sense parameters relating to the range, xy position, rate of closing and direction of closing of the object.

The sensor may be disposed on a moving object or on a stationary object that tracks the moving object. For example, in one embodiment, the sensor is mounted at a stationary position that is subject to collision with a moving object. The sensor may sense an imminent collision, and deploy a countermeasure(s) (from/on the moving object, from/on the stationary position, or both) to minimize potential damage as a result of the imminent collision.

According to the invention theprocessor tracks the sensed object as it closes, and output the errors associated with the track

According to the invention the processor uses the track and the errors associated with it to determine the probability of an imminent collision.

In one embodiment, the system includes an actual collision detector, and the countermeasure is deployed in response to the actual collision detector detecting an actual collision.

It is further provided a method comprising sensing an object; determining, in response to object sensing, an incipient collision with the sensed object will occur in 250 milliseconds or less.

The sensing may be performed continually, and the deploying may occur at least in part after the collision occurs.

### Example embodiment of a system according to the invention

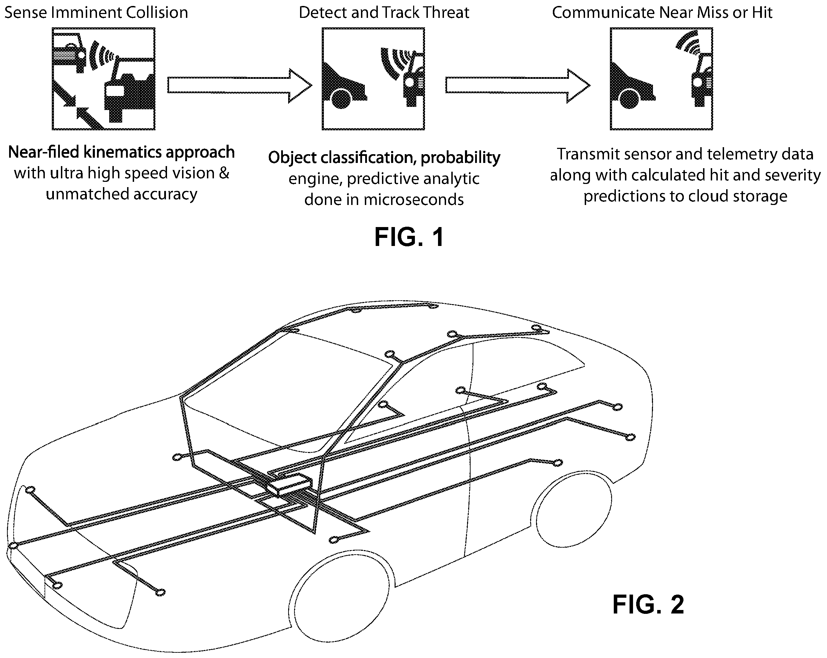

Example embodiments operate in three stages as shown in **Figure** 1. First, the system senses an imminent collision. This is accomplished in one embodiment by using a low-cost, high data-rate time-of-flight (TOF) or other type of fast sensor looking out no farther than for example 20 meters. Such sensing may be performed continually. Several sensors may, for example, be placed around the perimeter of the car housed in headlight and taillight fixtures. Other suitable sensors may include or comprise a stereoscopic sensor or a short-range radar sensor or an imaging acoustic sensor. Together, the sensors search the scene for elements that are moving relative to the vehicle. These elements are then defined as objects.

Second, the objects are tracked over time. The track is plotted with an error band that allows the probability of an impact to be calculated. In general, the errors tighten as the object approaches or closes. In addition, the size, speed and likely hit location of the object are used to estimate the potential severity of any collision.

In some embodiments, the object must meet three criteria to be declared a valid threat:
1. It must be judged as having a sufficiently high severity as to present a threat. For example, a glancing blow to the rear fender would be less likely to be gauged a threat than a head-on collision (at least for protection of the vehicle occupants).
2. The object must have a high likelihood of impacting the vehicle.
3. The object must be large enough to warrant countermeasures to be launched. For example, a short, small box may not pass the threshold, while a much taller, telephone-pole sized object would.

Example embodiments may err on the safe side of not launching countermeasures if the determination of an imminent collision is uncertain. For this reason, a normal passive safety system as initiated by the IMU an also remain fully functioning as a back-up safety system to deploy countermeasures when impact is detected. The operations of the IMU will be enhanced by the information available from the track and severity estimations.

**Figure** 2 shows is a visual image of an example embodiment of a stand-alone system in a passenger car. It shows the system's ECU taking in and processing the vehicle's sensor feeds. The system can be fully integrated with the vehicle systems including the IMU-based (e.g., accelerometer) airbag and seatbelt tensioner control system.

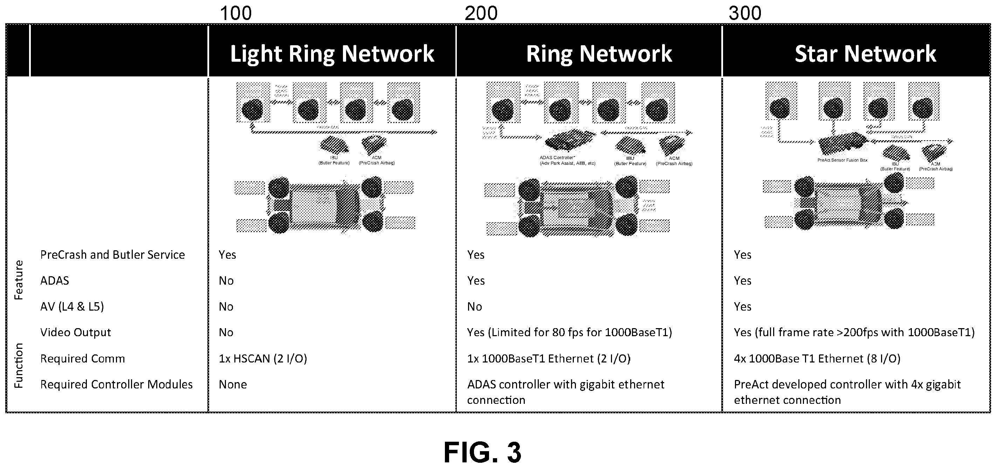

**Figure** 3 shows more detail of an embodiment of hardware integration approaches. In this case, "butler service" refers to features such as gesture recognition or sensing that the car is parked too close to another for safe egress. In 100, the precrash sensors are linked using a private gigabit Ethernet connection. The connection to other vehicle processors and apparatus is via the standard vehicle CAN bus. This supports precrash and butler services, but has insufficient data rate to support most ADAS and AV applications. In 200, the ring network architecture is similar to 100, except that it uses a vehicle-level gigabit Ethernet to send data to ADAS processors. However, there is still insufficient bandwidth to support most AV applications. In 300, the star network uses multiple gigabit ethernet connections to communicate to a central processor, thereby having sufficient bandwidth to pass full-frame, high-speed video that is required by many AV applications.

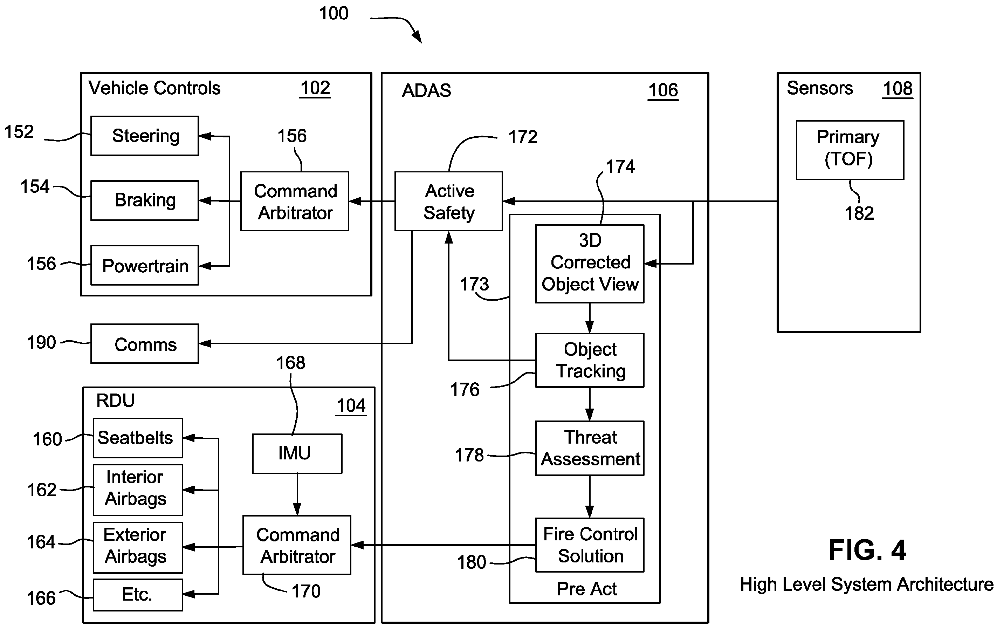

**Figure** 4 is a block diagram of an high-level system architecture 100 according to an embodiment of the invention that includes vehicle controls 102, a countermeasure deployment system 104, an advanced driver assistance system (ADAS) 106 and sensors 108. While the countermeasure deployment system would not be used in near misses, it would be activated in cases where there is an actual collision.

In the example shown, the vehicle controls 102 including steering 152, braking 154, powertrain 156 and command arbitrator 158 may be conventional and the same ones commonly used on any or many modern vehicle(s). The RDU 104 may include a conventional inertial measurement unit (IMU) 168 but in this case its output is provided to a command arbitrator 170 that controls deployment of various countermeasures including seat belt restraining system 160, interior airbags 162, exterior airbags 164 and other countermeasures 166. In the example shown, the seatbelts 160 and interior airbags 162 can be enhanced to accept control from the IMU 168 (indicating a collision has occurred) or via the command arbitrator from ADAS 106 (indicating a collision is imminent but has not yet occurred) so the seatbelts tighten and the airbags deploy, and these countermeasures can behave differently depending on which system is actuating their deployment. Additional countermeasures 164, 166 not found on a conventional vehicle (e.g., pedestrian airbag system, bumper shock absorber stiffener, etc.) may be deployed primarily in response to control from ADAS 106 detecting a collision is imminent. For example, one possible countermeasure could include last second chassis actions to mitigate the impact such as e.g., braking only with one brake (e.g., the right front brake or the left front brake, depending on the direction of expected impact) to help pivot the center of gravity to reduce the force of impact.

In the example shown, the ADAS Active Safety block 132 may be enhanced (as described below) and ADAS 106 may be provided with new functionality including a 3D corrected object view block 174, high speed object tracking 176, threat assessment 178 and fire control solution 180. Object tracking 176 is based on the 3D corrected object view 174, which in turn receives input from a sensor such as a very fast time of flight (TOF) or other sensor that can detect shape and direction. Sensor 182 can for example be non-contacting and based on technologies such as optical, electromagnetic, sound-based (e.g., ultrasonic), laser-based, radar-based, or any combination thereof. In one example embodiment, the sensor 182 may be of the type described in US provisional patent application no. 63/030,009 filed on May 26, 2020, and incorporated herein by reference.

The 3D corrected object view 174 is used by threat assessment 178 to assess threat of a likely collision. If threat assessment 178 determines such a threat exists, it records it as a near miss if the threat did not collide and a collision if it does. The threat assessment information is communicated to cloud storage via the communications system 190.

At the core of one solution according to an embodiment of the invention is an Edge Cross Correlation Engine (ECCE). With ECCE, the system according to an embodiment of the invention can perform rapid, direct 3D object definitions without the need for complex calibration or resorting to costly artificial intelligence (AI) methods. Once objects are formed, they can be readily tracked, which leads to the prediction of whether or not a collision will occur with its commensurate likelihood.

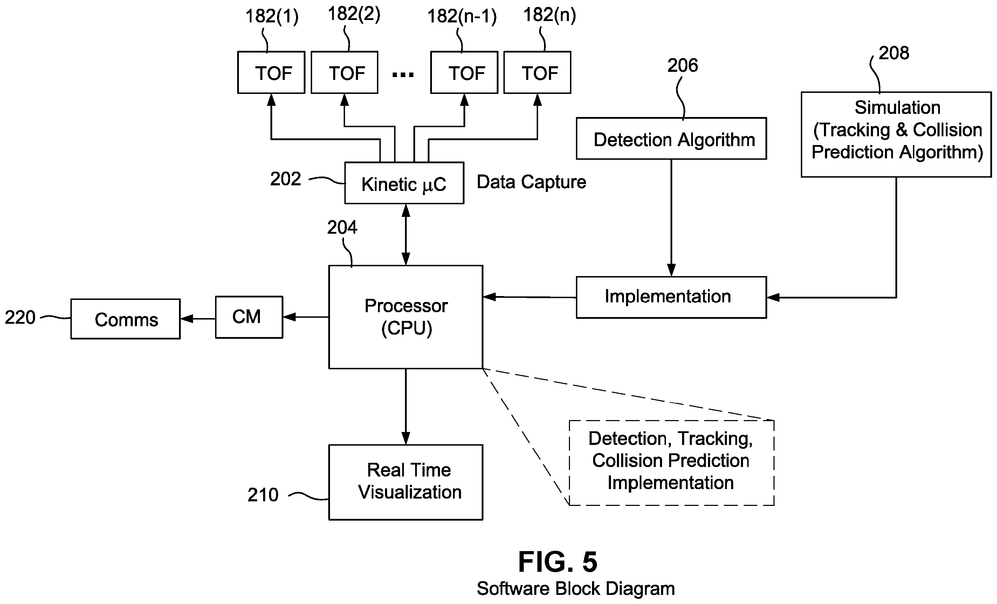

**Figure** 5 shows a software block diagram of a software architecture according to an embodiment of the invention that implements an ECCE described above. This architecture includes a kinetic microcontroller 202 that executes instructions stored in non-volatile memory to very rapidly capture and process data from multiple time-of-flight (TOF) sensors 182. A processor (CPU) 204 implements detection, tracking and collision prediction by performing detection algorithm(s) 206 and processing algorithms based on simulation 208 (which may be used for tracking and collision prediction). The processor 204 may provide real time visualization 210 and output messaging via communications 190 to cloud storage. The sensor and/or edge processor 204 can be integrated in headlamp, tail lamp, rearview mirror housing, A pillar, B pillar, front grill, front bumper, rear bumper or trunk housing of a vehicle.

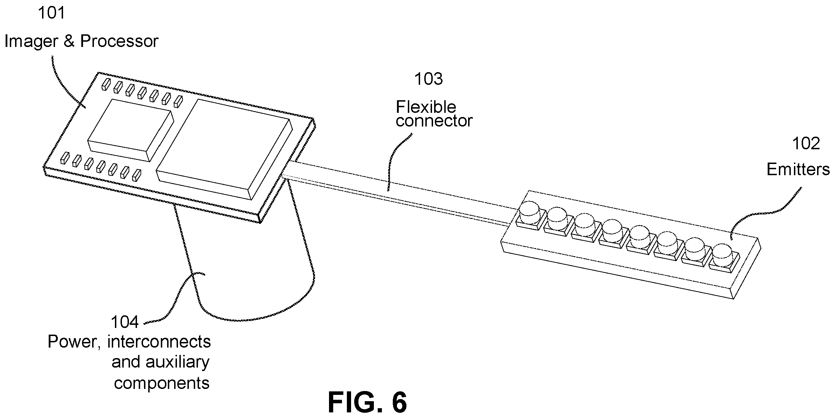

As shown in **Figure** 6, one embodiment takes a continuous wave (CW) TOF sensor that has been designed to sample at very high speed (up to 500 samples per second). The 101 imager and processor printed circuit board (PCB) is connected to the 102 emitters via a 103 flexible connector, typically via a gigabit Ethernet protocol. The power, external interconnects and auxiliary components are housed in 104.

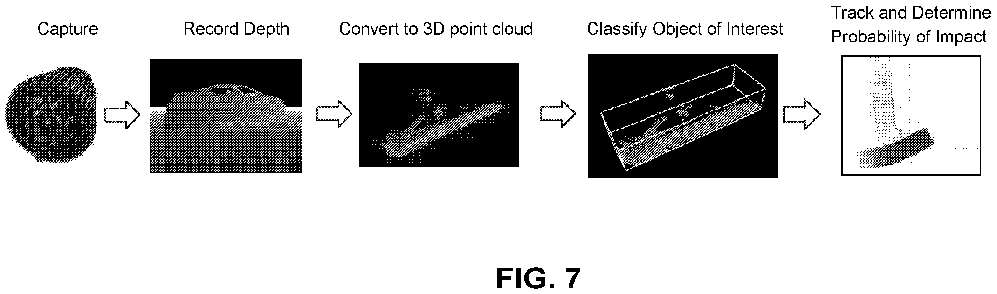

The method that system would operate with is shown in **Figure** 7. The sensor with on-board processing captures data; that for a CWTOF sensor is output as a radial depth map. This depth map is converted by the on-board software to a 3D point cloud, which in turn, is classified into an object of interest. The object is then tracked. Tracking typically entails placing each subsequent object frame location into a Kalman filter or similar. From this, the track location, velocity vector and even accelerations can be output along with estimates of their error. These values are then run through a "probability engine" to create an estimate of collision probability and a "severity estimator" to estimate the severity of any collision.

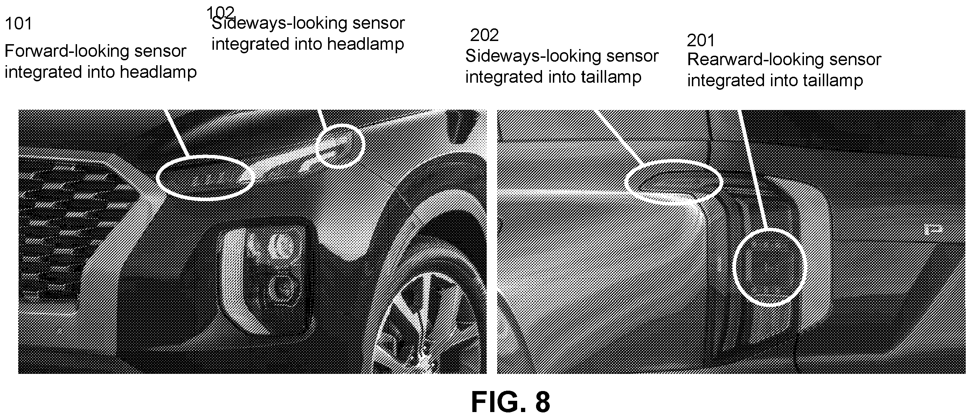

The system has been designed for ease of packaging onto existing and future vehicles. **Figure** 8 shows an embodiment according to the invention of a packaging scheme that incorporates a CWTOF sensor into the headlamps and tail lamps of a vehicle. 101 shows the round sensor to the left of 3 vertical pairs of emitters in a row that is facing forward. 102 shows a sideways looking sensor with an enclosed emitter panel. 201 is a straightforward rearward-looking sensor with 3 emitters above and 3 emitter below. 202 is also in the tail lamp but looking sideways with a row of 6 emitters to the left and a single sensor to the right.

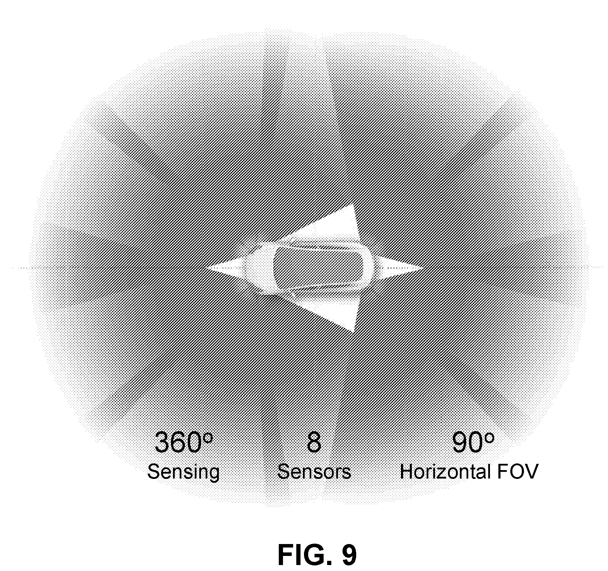

When configured into the headlamps and tail lamps in this manner, the system can provide 360 degree protection as shown in **Figure** 9.

The technology herein may be used in any context in which collisions may occur. For example, the sensor(s) may be mounted on a stationary object that is about to the struck by a moving object, or it/they may be mounted on a moving object that is about to strike an stationary object, or it/they may be mounted on a moving object that is about to strike or be struck by a moving object. A countermeasure may be deployed based on tracking information such as the direction of impact, the speed of impact, the force of impact, the time of impact, etc. The countermeasure can be deployed before impact, or it can be prepared for deployment and not employed until the moment of impact or even after the moment of impact. Multiple countermeasures can be deployed, e.g., some countermeasures can be deployed before impact and other countermeasures can be deployed at impact or after impact. Countermeasures can be employed in a "stair stepped" manner, based on severity of expected impact, direction of expected impact, expected force of impact, measured force of actual impact (once impact actually occurs), etc., as the system learns more information about the nature of the impact. Sensing and tracking may be performed continually - not just before impact.

While the invention has been described in connection with what is presently considered to be the most practical and preferred embodiment, it is to be understood that the invention is not to be limited to the disclosed embodiment, but on the contrary, is intended to cover various modifications included within the scope of the appended claims.

## Claims

1. A system comprising:
a sensor (108) that senses an object; and
a processor (204) operatively coupled to the sensor (108) that determines, in response to object sensing, an imminent collision with the sensed object before the collision occurs by tracking the sensed object as it closes, outputting errors associated with the track and using the track and the errors associated with it to determine the probability of an imminent collision, wherein the processor (204) determines the imminent collision in the time window of one second or less before the collision occurs.

2. The system of claim 1 further **characterized by** a countermeasure operatively coupled to the processor (204), the processor (204) controlling the countermeasure to deploy in response to determining the imminent collision will occur in less than 0.25 seconds.

3. The system according to claim 2, further **characterized in that** the countermeasure comprises an air bag or a self-tightening seatbelt or a moveable seat or an adjustable suspension.

4. The system according to any one of claims 2-3, further **characterized in that** deploying a countermeasure comprises initiating a last second chassis action to mitigate the impact, and preferably braking with only one front brake to pivot a vehicle center of gravity to reduce the force of impact.

5. The system according to any preceding claim, further **characterized in that** the processor (204) determines an imminent collision during a time window within the range of one-half second, or 250 milliseconds or200 milliseconds or 150 milliseconds or 100 milliseconds or 50 milliseconds, before a collision occurs.

6. The system according to any preceding claim, further **characterized in that** the sensor (108) comprises a non-contact sensor or a time-of-flight sensor (182) or a stereoscopic sensor or a short-range radar sensor or an imaging acoustic sensor.

7. The system according to any preceding claim, further **characterized in that** the sensor (108) senses parameters relating to the range, rate of closing and direction of closing of the object.

8. The system according to any preceding claim, further **characterized in that** the sensor (108) is disposed on a moving or stationary object.

9. The system according to any preceding claim, further **characterized in that** the processor (204) determines imminent collision once the collision is unavoidable and highly probable to occur in less than 0.25 seconds.

10. The system of any of the preceding claims further **characterized in that** the sensing is performed continually, and a countermeasure(s) may be deployed at least in part after the collision occurs.

11. The system of any preceding claims, further **characterized by** storing and forwarding the imminent or other likely collisions.

12. The system of any preceding claim, further **characterized by**:
the processor (204) determining, in response to object sensing, driving habits that indicate a likelihood of collision or avoidance of collision with objects, and using a reporting device to report the determination.

13. A method comprising:
sensing an object using a sensor (108) with a range of less than 20 meters;
determining, in response to object sensing, possible collision conditions with the sensed object by tracking the sensed object as it closes, outputting errors associated with the track and using the track and the errors associated with it to determine the probability of an imminent collision in time windows of one second or less before the collision occurs; and reporting the determination(s).

## Patentansprüche

1. System, umfassend:
einen Sensor (108), der ein Objekt erfasst; und
einen Prozessor (204), der betriebsfähig mit dem Sensor (108) gekoppelt ist und als Reaktion auf die Objekterfassung eine bevorstehende Kollision mit dem erfassten Objekt bestimmt, bevor die Kollision stattfindet, indem er das erfasste Objekt verfolgt, während es sich nähert, der Verfolgung zugeordnete Fehler ausgibt und die Verfolgung und die dieser zugeordneten Fehler verwendet, um die Wahrscheinlichkeit einer bevorstehenden Kollision zu bestimmen, wobei der Prozessor (204) die bevorstehende Kollision in dem Zeitfenster von einer Sekunde oder weniger vor dem Auftreten der Kollision bestimmt.

2. System nach Anspruch 1, ferner **gekennzeichnet durch** eine Gegenmaßnahme, die betriebsfähig mit dem Prozessor (204) gekoppelt ist, wobei der Prozessor (204) die Gegenmaßnahme steuert, um sie als Reaktion auf das Bestimmen, dass die bevorstehende Kollision in weniger als 0,25 Sekunden stattfinden wird, einzusetzen.

3. System nach Anspruch 2, ferner **dadurch gekennzeichnet, dass** die Gegenmaßnahme einen Airbag oder einen sich selbst straffenden Sicherheitsgurt oder einen beweglichen Sitz oder eine anpassbare Aufhängung umfasst.

4. System nach einem der Ansprüche 2-3, ferner **dadurch gekennzeichnet, dass** das Einsetzen einer Gegenmaßnahme das Einleiten einer Fahrwerksaktion in letzter Sekunde, um den Aufprall abzumildern, und vorzugsweise das Abbremsen mit nur einer Vorderradbremse umfasst, um den Fahrzeugschwerpunkt zu schwenken, um die Kraft des Aufpralls zu reduzieren.

5. System nach einem der vorhergehenden Ansprüche, ferner **dadurch gekennzeichnet, dass** der Prozessor (204) eine bevorstehende Kollision während eines Zeitfensters innerhalb des Bereichs von einer halben Sekunde, oder 250 Millisekunden oder 200 Millisekunden oder 150 Millisekunden oder 100 Millisekunden oder 50 Millisekunden bestimmt, bevor eine Kollision auftritt.

6. System nach einem der vorhergehenden Ansprüche, ferner **dadurch gekennzeichnet, dass** der Sensor (108) einen berührungslosen Sensor oder einen Laufzeitsensor (182) oder einen stereoskopischen Sensor oder einen Kurzstrecken-Radarsensor oder einen abbildenden akustischen Sensor umfasst.

7. System nach einem der vorhergehenden Ansprüche, ferner **dadurch gekennzeichnet, dass** der Sensor (108) Parameter erfasst, die sich auf die Reichweite, die Annäherungsgeschwindigkeit und die Annäherungsrichtung des Objekts beziehen.

8. System nach einem der vorhergehenden Ansprüche, ferner **dadurch gekennzeichnet, dass** der Sensor (108) an einem sich bewegenden oder stationären Objekt angeordnet ist.

9. System nach einem der vorhergehenden Ansprüche, ferner **dadurch gekennzeichnet, dass** der Prozessor (204) eine unmittelbar bevorstehende Kollision bestimmt, wenn die Kollision unvermeidbar ist und mit hoher Wahrscheinlichkeit in weniger als 0,25 Sekunden auftritt.

10. System nach einem der vorhergehenden Ansprüche, ferner **dadurch gekennzeichnet, dass** das Erfassen kontinuierlich durchgeführt wird und die Gegenmaßnahme(n) wenigstens teilweise nach Auftreten der Kollision eingesetzt werden kann/können.

11. System nach einem der vorhergehenden Ansprüche, ferner **gekennzeichnet durch** Speichern und Weiterleiten der bevorstehenden oder anderer wahrscheinlicher Kollisionen.

12. System nach einem der vorhergehenden Ansprüche, ferner **gekennzeichnet dadurch, dass**:
der Prozessor (204) als Reaktion auf die Objekterfassung Fahrgewohnheiten bestimmt, die eine Wahrscheinlichkeit einer Kollision oder Vermeidung einer Kollision mit Objekten anzeigen, und eine Vorrichtung zum Melden der Bestimmung verwendet.

13. Verfahren, umfassend:
Erfassen eines Objekts unter Verwendung eines Sensors (108) mit einer Reichweite von weniger als 20 Metern;
Bestimmen als Reaktion auf die Objekterfassung möglicher Kollisionsbedingungen mit dem erfassten Objekt durch Verfolgen des erfassten Objekts, während es sich nähert, Ausgeben von Fehlern, die der Verfolgung zugeordnet sind und Verwenden der Verfolgung und der dieser zugeordneten Fehler, um die Wahrscheinlichkeit einer bevorstehenden Kollision in Zeitfenstern von einer Sekunde oder weniger zu bestimmen, bevor die Kollision auftritt; und Melden der Bestimmung(en).

## Revendications

1. Système comprenant :
un détecteur (108) qui détecte un objet, et
un processeur (204) couplé de manière fonctionnelle au détecteur (108) et qui détermine, en réaction à une détection d'objet, une collision imminente avec l'objet détecté avant que la collision ne se produise en suivant l'objet détecté à mesure qu'il se rapproche, en émettant des erreurs associées au suivi et en utilisant le suivi et les erreurs qui lui sont associées pour déterminer la probabilité d'une collision imminente, le processeur (204) déterminant la collision imminente dans un intervalle de temps d'au plus une seconde avant que la collision ne se produise.

2. Système selon la revendication 1, **caractérisé en outre par** une contre-mesure couplée de manière fonctionnelle au processeur (204), le processeur (204) commandant le déploiement de la contre-mesure en réaction à la détermination que la collision imminente se produira dans moins de 0,25 seconde.

3. Système selon la revendication 2, **caractérisé en outre en ce que** la contre-mesure comprend un coussin de sécurité gonflable ou une ceinture de sécurité à serrage automatique ou un siège mobile ou une suspension ajustable.

4. Système selon l'une quelconque des revendications 2 et 3, **caractérisé en outre en ce que** le déploiement d'une contre-mesure comprend le déclenchement d'une action de châssis à la dernière seconde pour atténuer l'impact, et de préférence un freinage avec un seul frein avant pour faire pivoter le centre de gravité du véhicule afin de réduire la force de l'impact.

5. Système selon l'une quelconque des revendications précédentes, **caractérisé en outre en ce que** le processeur (204) détermine une collision imminente pendant un intervalle de temps situé dans la plage d'une demi-seconde, ou 250 millisecondes ou 200 millisecondes ou 150 millisecondes ou 100 millisecondes ou 50 millisecondes, avant qu'une collision ne se produise.

6. Système selon l'une quelconque des revendications précédentes, **caractérisé en outre en ce que** le détecteur (108) comprend un détecteur sans contact ou un détecteur à temps de vol (182) ou un détecteur stéréoscopique ou un détecteur radar à courte portée ou un détecteur acoustique à imagerie.

7. Système selon l'une quelconque des revendications précédentes, **caractérisé en outre en ce que** le détecteur (108) détecte des paramètres relatifs à la distance, à la vitesse de rapprochement et à la direction de rapprochement de l'objet.

8. Système selon l'une quelconque des revendications précédentes, **caractérisé en outre en ce que** le détecteur (108) est disposé sur un objet mobile ou fixe.

9. Système selon l'une quelconque des revendications précédentes, **caractérisé en outre en ce que** le processeur (204) détermine qu'une collision est imminente dès que celle-ci est inévitable et qu'il est hautement probable qu'elle se produire dans moins de 0,25 seconde.

10. Système selon l'une quelconque des revendications précédentes, **caractérisé en outre en ce que** la détection est effectuée en continu et qu'une ou plusieurs contre-mesures peuvent être déployées au moins en partie après la collision.

11. Système selon l'une quelconque des revendications précédentes, **caractérisé en outre par** l'enregistrement et la communication de la collision imminentes ou autres collisions probables.

12. Système selon l'une quelconque des revendications précédentes, **caractérisé en outre en ce que** :
le processeur (204) détermine, en réaction à la détection d'objets, des habitudes de conduite qui indiquent une probabilité de collision ou d'évitement de collision avec des objets, et utilise un dispositif de signalement pour signaler la détermination.

13. Procédé comprenant :
la détection d'un objet à l'aide d'un détecteur (108) ayant une portée inférieure à 20 mètres ;
la détermination, en réaction à la détection d'un objet, de conditions de collision possibles avec l'objet détecté en suivant l'objet détecté à mesure qu'il se rapproche, en émettant des erreurs associées au suivi et en utilisant le suivi et les erreurs qui lui sont associées pour déterminer la probabilité d'une collision imminente dans des intervalles de temps d'au plus une seconde avant que la collision ne se produise ; et le signalement de la ou des déterminations.
